# EUROPEAN PATENT APPLICATION

(11) **EP 2 615 668 A1**
(43) Date of publication of application: **17.07.2013**
(21) Application number: 11823521.7
(22) Date of filing: 05.09.2011
(51) Int. Cl.: H01M 4/13, H01M 2/16, H01M 10/0566

(54) **NON-AQUEOUS ELECTROLYTE BATTERY**

(30) Priority: 06.09.2010 JP 2010198759
(71) Applicant: Shin-Kobe Electric Machinery Co., Ltd., Tokyo 104-0044 (JP)
(72) Inventor: TSUJIKAWA, Tomonobu, Tokyo 108-0023 (JP); ARAKAWA, Masayasu, Tokyo 110-0015 (JP); AICHI, Katsuhide, Tokyo 104-0044 (JP); MIYAMOTO, Yoshiki, Tokyo 104-0044 (JP); NISHIYAMA, Hiroo, Tokyo 104-0044 (JP)
(74) Representative: Schiweck, Weinzierl & Koch
(86) International application number: PCT/JP2011/070145
(87) International publication number: WO 2012/033046

(57) **Abstract**

A non-aqueous electrolyte battery capable of securing safety at a time of battery abnormality and restricting a drop in a charge/discharge property or lowering in an energy density at a time of battery use is provided. The lithium-ion secondary battery 1 has an electrode group 5 formed by winding a positive electrode plate 2 that a positive electrode mixture layer including an active material is formed at a collector, a negative electrode plate 3 that a negative electrode mixture layer including an active material is formed at a collector via a porous separator 4. A flame retardant layer is disposed at one side or both sides of at least one kind of the positive electrode plate, the negative electrode plate and the separator. The flame retardant layer contains a non-fluorinated organic polymer, a flame retardant and a thickener.

## Description

### FIELD OF THE INVENTION

The present invention relates to a non-aqueous electrolyte battery, and more particularly to a non-aqueous electrolyte battery that a positive electrode plate which a positive electrode mixture layer including an active material is formed at a collector and a negative electrode plate which a negative electrode mixture layer including an active material is formed at a collector are disposed via a porous separator.

### DESCRIPTON OF RELATED ART

As a secondary battery of which electrolyte is an aqueous solution, an alkaline battery, a lead battery or the like is known. In place of such an aqueous solution secondary battery, a non-aqueous electrolyte battery represented by a lithium-ion secondary battery which is small, light-weighted and has a high energy density is being widely used. An organic solvent such as dimethyl ether or the like is included in an electrolyte used for the non-aqueous electrolyte battery. Because the organic solvent has a property of inflammability, for example, in a case that the battery falls into an abnormal state such as overcharge, internal shortcut and the like or that a battery temperature goes up when it is thrown into fire, behavior of the battery may become violent due to burning of a battery constituting material or a thermal decomposition reaction of an active material.

In order to avoid such a situation to secure safety of the battery, various safety techniques have been proposed. Namely, a technique for making a battery non-flammable by dissolving a flame retardant (non-flammability giving material) into a non-aqueous electrolyte (See JPA 04-184870.), and a technique for making a separator non-flammable by dispersing a flame retardant into the separator (See JPA 2006-127839.) are disclosed.

### SUMMARY OF THE INVENTION

### [Problem to be solved by the Invention]

However, the techniques disclosed in JPA 04-184870 and JPA 2006-127839 are techniques for making non-flammable a battery constituting material itself such as the non-aqueous electrolyte or separator containing the flame retardant, and accordingly it is difficult to make the battery itself non-flammable. For example, in the technique disclosed in JPA 2006-127839, the separator itself can obtain non-flammability according to an amount of the flame retardant contained in the separator. In a case that this technique is applied to the lithium-ion secondary battery, because heat generation becomes large due to a thermal decomposition reaction of an active material in the lithium-ion secondary battery, a large amount of the flame retardant becomes necessary in order to restrict an increase in a battery temperature. Further, in the separator in which a large amount of the flame retardant is contained, there is a drawback in that it is difficult to retain strength originally required as a separator.

In order to solve the above problem, it is considered that burning of the constituting material can be restricted by forming (disposing) a flame retardant layer at (a surface of) one side or both sides of at least one kind of a positive electrode plate, a negative electrode plate and a separator, even if a temperature goes up due to battery abnormality. However, because the flame retardant layer hampers the movement of lithium-ions, a drop in a charge/discharge property or lowering in an energy density is likely to occur.

In view of the above circumstances, the present invention is to provide a non-aqueous electrolyte battery capable of securing safety at a time of battery abnormality and restricting a drop in a charge/discharge property or lowering in an energy density at a time of battery use.

### [Means for solving the Problem]

In order to solve the above problem, the present invention is directed to a non-aqueous electrolyte battery that a positive electrode plate which a positive electrode mixture layer including an active material is formed at a collector and a negative electrode plate which a negative electrode mixture layer including an active material is formed at a collector are disposed via a porous separator, wherein a flame retardant layer is formed at one side or both sides of at least one kind of the positive electrode plate, the negative electrode plate and the separator, and wherein the flame retardant layer contains a non-fluorinated organic polymer, a flame retardant and a thickener.

In the present invention, it is preferable that the flame retardant layer contains the non-fluorinated organic polymer at a ratio ranging from 2 to 10wt%, the flame retardant at a ratio ranging from 87 to 97wt% and the thickener at a ratio ranging from 1 to 3wt%. It is also preferable that the non-fluorinated organic polymer is a polymer including an aromatic vinyl compound or a conjugated diene compound. The non-fluorinated organic polymer may be one kind selected from styrene-butadiene copolymer and acrylonitrile-butadiene copolymer. It is preferable that the flame retardant is a water-insoluble phosphazene compound having a solid state under a room temperature. The flame retardant layer may be formed by applying a water-soluble slurry containing the non-fluorinated organic polymer, the flame retardant and the thickener to one side or both sides of at least one kind of the positive electrode plate, the negative electrode plate and the separator. Further, the flame retardant layer may be formed by applying a water-soluble slurry containing the non-fluorinated organic polymer, the flame retardant and the thickener onto a resin membrane or a metal foil, and then transferring the water-soluble slurry to one side or both sides of at least one kind of the positive electrode plate, the negative electrode plate and the separator.

### [Effects of the Invention]

According to the present invention, effects can be obtained that the flame retardant can restrict burning of a battery constituting material when a temperature goes up due to battery abnormality since the flame retardant layer containing the flame retardant is formed at one side or both sides of at least one kind of the positive electrode plate, the negative electrode plate and the separator; and the movement of lithium-ions is not hampered and a charge/discharge property or an energy density can be maintained since a gap between particles is formed without using a pore former due to that the flame retardant layer contains the non-fluorinated organic polymer, the flame retardant and the thickener.

### BRIEF DESCRIPTION OF THE DRAWINGS

Fig. 1 is a sectional view of a cylindrical lithium-ion secondary battery of an embodiment to which the present invention is applicable; and
Fig. 2 is a graph showing a discharge capacity when a discharge rate of each lithium-ion secondary battery of Examples and Controls is changed.

### DETAILED DESCRIPTION OF THE PREFERRED EMBODIMENTS

With reference to the drawings, an embodiment in which the present invention is applied to a cylindrical lithium-ion secondary battery of 18650 type will be explained below.

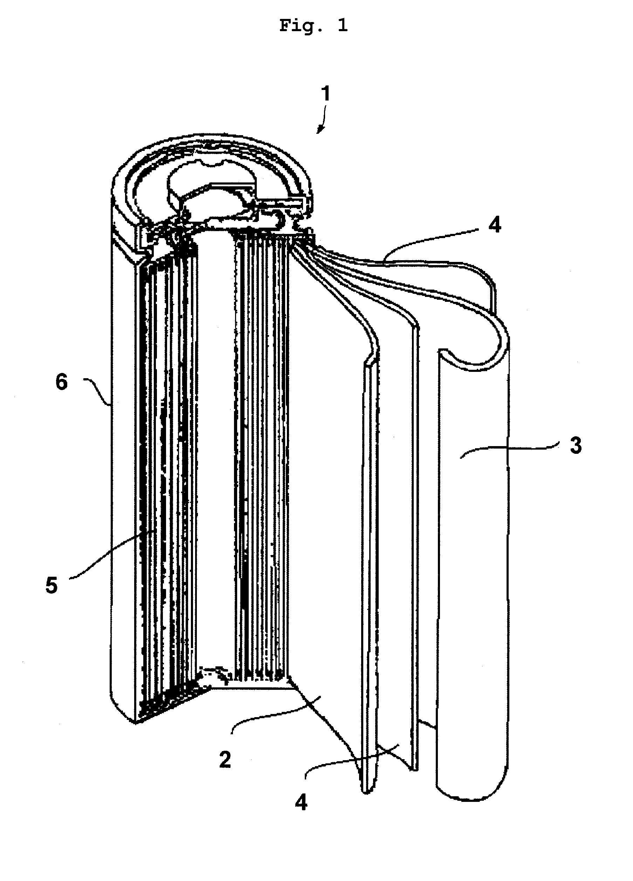

As shown in Fig. 1, a lithium-ion secondary battery (non-aqueous electrolyte battery) 1 of this embodiment has a cylindrical battery container 6 made of nickel plated steel and having a bottom. An electrode group 5 which is formed by winding a strip-shaped positive electrode plate 2 and a strip-shaped negative electrode plate 3 spirally in a cross section through a separator 4 is accommodated in the battery container 6.

The electrode group 5 is formed by winding the positive electrode plate 2 and the negative electrode plate 3 spirally in a cross section through a porous separator 4 made of polyethylene. In this embodiment, each of the separators 4 is set to have a width of 58mm and a thickness of 30 µm. A ribbon shaped positive electrode tab terminal made of aluminum of which one end is fixed to the positive electrode plate 2 is led at an upper end face of the electrode group 5. A disc shaped battery lid which functions as a positive electrode external terminal is disposed at an upper side of the electrode group 5. Another end of the positive electrode tab terminal is welded by ultrasonic welding to a bottom surface of the battery lid.

On the other hand, a ribbon shaped negative electrode tab terminal made of copper of which one end is fixed to the negative electrode plate is led at a lower end face of the electrode group 5. Another end of the negative electrode tab terminal is welded by resistance welding to an inner bottomportion of the battery container 6. Accordingly, the positive electrode tab terminal and the negative electrode tab terminal are respectively led at both end faces opposed to each other with respect to the electrode group 5. Incidentally, unillustrated insulating covering is applied to the entire circumference of the electrode group 5.

The battery lid is fixed by performing caulking via an insulation gasket made of resin at an upper portion of the battery container 6. For this reason, an interior of the lithium-ion secondary battery 1 is sealed. Further, an unillustrated non-aqueous electrolyte (electrolytic solution) is injected to the battery container 6. The non-aqueous electrolyte is formed, for example, by dissolving lithium hexafluorophosphate (LiPF₆) as a lithium salt at 1 mole/litter into a carbonate-based mixed solvent of ethylene carbonate (EC) and dimethyl carbonate (DMC) mixed at a volume ratio of 2:3.

The positive electrode plate 2 constituting the electrode group 5 has an aluminum foil or aluminum alloy foil as a positive electrode collector. A thickness of the positive electrode collector is set to 20 µm in this embodiment. A positive electrode mixture layer is formed by applying a positive electrode mixture approximately uniformly to both surfaces of the positive electrode collector. A lithium transition metal complex oxide served as a positive electrode active material is included in the positive electrode mixture.

Various kinds of lithium transition metal complex oxides known in general may be used for such a lithium transition metal complex oxide. In this embodiment, lithium manganate powder having a spinel crystal structure is used for the lithium transition metal complex oxide. For example, 8wt% of scale-shaped graphite and 2wt% of acetylene black as a conductive material, and 5wt% of polyvinylidene fluoride (hereinafter abbreviated as PVdF) as a binder, to 85wt% (weight parts) of the lithium transition metal complex oxide, are mixed in the positive electrode mixture. A thickness of the positive electrode mixture is set to a range of from 30 to 150µm (per one surface). When the positive electrode mixture is applied to the positive electrode collector, a slurry-state dispersion that the positive electrode mixture is dispersed to N-methyl-2-pyrolidone (hereinafter abbreviated as NMP) of a viscosity adjusting solvent is produced. At this time, the dispersion is stirred by a mixing machine equipped with rotary vanes. This dispersion is applied to the positive electrode collector by a roll-to-roll transfer method. The positive electrode plate 2, after drying, is pressed for integration and then cut to have a width of 54mm so formed as a strip shape. A positive electrode tab terminal is welded by ultrasonic welding to an approximately central portion in a longitudinal direction of the positive electrode plate.

Further, a flame retardant layer is formed at a surface of the positive electrode mixture layer, namely, both surfaces of the positive electrode plate 2. A flame retardant, a non-fluorinated organic polymer of a binder and a thickener are contained in the flame retardant layer. A thickness of the flame retardant layer is set to a range of from 5 to 15µm.

As a non-fluorinated organic polymer, a polymer including an aromatic vinyl compound or a conjugated diene compound may be listed, and concretely, styrene-butadiene copolymer or acrylonitrile-butadiene copolymer can be used. In this embodiment, styrene-butadiene copolymer (hereinafter abbreviated as SBR) is used for the non-fluorinated organic polymer. For example, a water-insoluble phosphazene compound of which main constituents are phosphorus and nitrogen is used for the flame retardant. A mixing ratio (percentage) of the flame retardant is set to 10wt% to the positive electrode mixture in this embodiment.

The flame retardant layer can be formed by the following methods. A viscosity-controlled slurry that a powder-state (solid state) phosphazene compound of which average particle diameter is 3µm and SBR of a binder are dispersed to a carboxymethyl cellulose (hereinafter abbreviated as CMC) aqueous solution that CMC of a thickener is dissolved into ion exchanged water is produced. The flame retardant layer is formed by applying the obtained slurry to the surface of the positive electrode mixture layer, and after drying, it is rolled to adjust a thickness of the entire positive electrode plate 2. Or, the flame retardant layer is formed by applying the obtained slurry to the surface of a resin membrane, for example, a polyethylene terephthalate (hereinafter abbreviated as PET) film first, and after drying, it is transferred to the surface of the positive electrode mixture layer by a roll press machine or the like. In either of the methods, by using the aqueous slurry, the flame retardant layer can be formed without giving damage such as deformation or the like to the positive electrode mixture layer which is formed by using organic solvent. The flame retardant layer contains the phosphazene compound of a flame retardant at a ratio ranging from 87 to 97wt%, SBR of a non-fluorinated organic polymer at a ratio ranging from 2 to 10wt% and CMC of a thickener at a ratio ranging from 1 to 3wt%.

The phosphazene compound is a cyclic compound expressed by a general formula of (NPR₂)₃ or (NPR₂)₄. R in the general formula expresses univalent substituent. As the univalent substituent, alkoxy group such as methoxy group, ethoxy group and the like, aryloxyl group such as phenoxy group, methylphenoxy group and the like, alkyl group such as methyl group, ethyl group and the like, aryl group such as phenyl group, tolyl group and the like, amino group including substitutional amino group such as methylamino group and the like, alkylthio group such as methylthio group, ethylthio group and the like, and arylthio group such as phenylthio group and the like may be listed. The phosphazene compound has a solid state or liquid state according to a kind of the substituent, and in this embodiment, a phosphazene compound having a solid state under a room temperature is used.

On the other hand, the negative electrode plate has a rolled copper foil or rolled copper alloy foil as a negative electrode collector. A thickness of the negative electrode collector is set to 10µm in this embodiment. A negative electrode mixture is applied approximately uniformly at both surfaces of the negative electrode collector to form a negative electrode mixture layer. Amorphous carbon powder in/from which lithium-ions can be occluded/released as a negative electrode active material is included in the negative electrode mixture.

In the negative electrode mixture, for example, PVDF of a binder is mixed other than the negative electrode active material. A mass (weight) ratio between the negative electrode active material and PVDF can be set, for example, to 90 :10 . When the negative electrode mixture is applied to the negative electrode collector, a slurry-state dispersion that the negative electrode mixture is dispersed to NMP of a viscosity adjusting solvent is produced. At this time, the dispersion is stirred by a mixing machine equipped with rotary vanes. This dispersion is applied to the negative electrode collector by a roll-to-roll transfer method. The negative electrode plate 3, after drying, is pressed and then cut to have a width of 56mm so formed as a strip shape. The negative electrode tab terminal is welded by ultrasonic welding to one end in a longitudinal direction of the negative electrode plate 3.

Incidentally, a length of the negative electrode plate 3 is set, when the positive electrode plate 2, the negative electrode plate 3 and the separator 4 are wound, 6mm longer than that of the positive electrode plate 2 such that the positive electrode plate 2 does not go beyond the negative electrode plate 3 in a winding direction at innermost and outermost winding circumferences.

### (Examples)

Next, Examples of the lithium-ion secondary battery 1 manufactured according to the above embodiment will be explained. Incidentally, lithium-ion secondary batteries of Controls (Comparative Examples) manufactured for making a comparison with Examples will also be explained.

### (Example 1)

In Example 1, an aqueous slurry that 94wt% of the phosphazene compound of a flame retardant and 5wt% of SBR of a binder are dispersed to CMC aqueous solution into which 2wt% of CMC of a thickener is dissolved was produced. The flame retardant layer was formed by applying the obtained aqueous slurry directly to the surface of the positive electrode mixture layer and then drying it. The applying amount of the aqueous slurry was adjusted such that the flame retardant layer is set to 10wt% to the positive mixture layer. The lithium-ion secondary battery 1 was manufactured by using this positive electrode plate 2.

### (Example 2)

In Example 2, the flame retardant layer was formed by applying the same aqueous slurry as Example 1 onto the PET film and drying it, and then, while coming it contact with the surface of the positive mixture layer, transferring it to the positive mixture layer bypassing it through the roll press machine. The lithium-ion secondary battery 1 was manufactured by using the obtained positive electrode plate 2.

### (Control 1)

In Control 1, a NMP solution (non-aqueous slurry) into which 80wt% of the phosphazene compound of a flame retardant and 20wt% of PVDF of a binder are dissolved was produced. The flame retardant layer was formed by applying the obtained NMP solution directly to the both surfaces of the positive electrode plate and then drying it. The applying amount of the NMP solution was adjusted such that the flame retardant layer is set to 10wt% to the positive mixture layer. The lithium-ion secondary battery was manufactured by using this positive electrode plate. Namely, Control 1 is a lithium-ion secondary battery that pores are not formed at the flame retardant layer.

### (Control 2)

In Control 2, the flame retardant layer was formed by applying the same NMP solution as Control 1 onto the PET film and drying it, and then, while coming it contact with the both surfaces of the positive electrode plate, transferring it to the positive electrode mixture layer by passing it through the roll press machine. The lithium-ion secondary battery was manufactured by using the obtained positive electrode plate. Namely,Control2isalithium-ionsecondary battery that pores are not formed at the flame retardant layer.

### (Control 3)

In Control 3, a dispersed solution that an aluminum oxide of a pore former is dispersed to the same NMP solution as Control 1 was produced. The flame retardant layer was formed by applying the obtained solution directly to the both surfaces of the positive electrode plate and then drying it. The applying amount of the NMP solution was adjusted such that the flame retardant layer is set to 10wt% to the positive mixture layer. The lithium-ion secondary battery was manufactured by using this positive electrode plate. Namely, Control 3 is a lithium-ion secondary battery that pores are formed at the flame retardant layer due to the pore former.

### (Test)

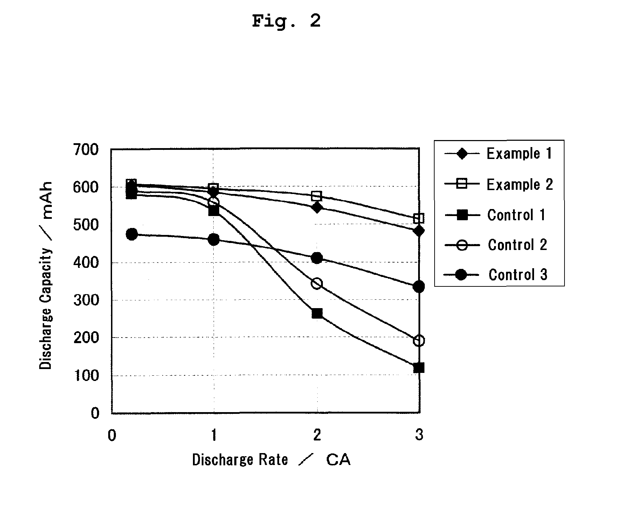

A discharge test was carried out with respect to each battery of Examples and Controls by changing a discharge rate to 0.2CA, 1CA, 2CA and 3CA respectively to measure a discharge capacity (mAh) of each battery. Fig. 2 shows the measured results of the discharge capacity in each discharge rate.

As shown in Fig. 2, Control 1 that PVDF is used as a binder in the flame retardant layer exhibited 582mAh as a discharge capacity when the discharge rate is 0.2CA, and 118mAh as a discharge capacity when the discharge rate is 3CA. Namely, the discharge capacitydropped largely as the discharge rate goes up. Control 3 that PVDF is used as a binder in the flame retardant layer and the pore former is added exhibited 475mAh as a discharge capacity when the discharge rate is 0.2CA, and 334mAh as a discharge capacity when the discharge rate is 3CA. Namely, it was not observed that the discharge capacity dropped largely even if the discharge rate goes up, however, the discharge capacity when the discharge rate is 0.2CA was lower than that of Control 1. On the other hand, Control 2 that the flame retardant layer was formed without using the aluminum oxide of a pore former like Control 1 exhibited 590mAh as a discharge capacity when the discharge rate is 0.2CA, and 189mAh as a discharge capacity when the discharge rate is 3CA. Namely, it is preferable in the discharge capacity when the discharge rate is low, however, it was understood that a property at a high (discharge) rate is inferior.

By contrast, Example 1 that SBR is used as a binder in the flame retardant layer exhibited 605mAh as a discharge capacity when the discharge rate is 0.2CA, and 482mAh as a discharge capacity when the discharge rate is 3CA. Namely, the discharge capacity did not drop to the degree in Control 1 even if the discharge rate goes up, and Example 1 demonstrated a preferable charge/discharge property. In Example 1, the flame retardant layer was formed by using the aqueous slurry that the phosphazene compound of a flame retardant and SBR of a binder are dispersed to ion exchanged water into which CMC of a thickener is dissolved. According to this, a gap between particles is formed without using the pore former, and accordingly the movement of lithium-ions is not hampered.

Further, Example 2 that the flame retardant layer was formed by applying the slurry onto the PET film and drying it, and then coming it contact with the both surfaces of the positive electrode plate 2 to transfer it to the surfaces exhibited 608mAh as a discharge capacity when the discharge rate is 0.2CA, and 514mAh as a discharge capacity when the discharge rate is 3CA. Namely, Example 2 exhibited a higher value in each discharge capacity than Example 1 that the flame retardant layer was formed by applying the aqueous slurry directly to the both surfaces of the positive electrode plate 2. This is because the aqueous slurry infiltrates into the pores formed at the positive electrode mixture layer due to that the aqueous slurry is applied directly to the surface of the positive electrode mixture layer in Example 1, and thus the movement of lithium-ions is likely to be hampered. By contrast, in Example 2, because the flame retardant layer is transferred to the both surfaces of the positive electrode plate 2 after drying it on the PET film, the aqueous slurry does not infiltrate into the pores formed at the positive electrode plate 2, and accordingly the movement of lithium-ions is not hampered.

### (Effects and the like)

Next, effects and the like of the lithium-ion secondary battery 1 according to this embodiment will be explained.

In this embodiment, the flame retardant layer in which the phosphazene compound served as a flame retardant is contained is formed at the surface of the positive electrode mixture layer of the positive electrode plate 2 constituting the electrode group 5. The phosphazene compound exists near the positive electrode active material because the flame retardant layer is formed at the surface of the positive electrode mixture layer. When the lithium-ion secondary battery 1 is exposed under an abnormally high temperature environment or causes battery abnormality, a battery temperature increases to generate active species such as a radical and the like due to the thermal decomposition reaction of the positive electrode active material or a chain reaction thereof. The radical causes a termination reaction with the phosphazene compound to restrict the thermal decomposition reaction or the chain reaction. According to this, burning of a battery constituting material is restricted to make battery behavior of the lithium-ion secondary battery 1 calm, and accordingly safety of the battery can be secured.

Further, in this embodiment, the phosphazene compound served as a flame retardant, SBR of a non-fluorinated organic polymer served as a binder and CMC served as a thickener are contained in the flame retardant layer. For this reason, a gap between particles is formed without using a pore former, and accordingly the movement of lithium-ions is not hampered at a charge/discharge time, and thus the battery can maintain a charge/discharge property or an energy density. Further, the flame retardant layer is formed at the surface of the positive electrode mixture layer. For this reason, the mixing ratio of the positive electrode active material causing an electrode reaction is secured at the positive electrode mixture layer, and accordingly a capacity or output of the lithium-ion secondary battery 1 can be secured. Moreover, the thickness of the flame retardant layer is set to a range of from 5 to 15µm. For this reason, there is a thickness of the flame retardant layer at the surface of the positive electrode mixture layer, but because the thickness is set to a degree that the movement of lithium-ions is not hampered, a charge/discharge property of the lithium-ion secondary battery 1 can be secured.

Incidentally, in this embodiment, an example that the flame retardant layer is formed at the surface of the positive electrode mixture layer, namely the both surfaces of the positive electrode plate 2 was shown, however, the present invention is not limited to this. For example, the flame retardant layer may be formed at the negative electrode plate 3 or the separator 4. Namely, the flame retardant layer may be formed at one side or both sides of at least one kind of the positive electrode plate 2, the negative electrode plate 3 and the separator 4. When it is considered that an exothermic reaction at the positive electrode plate 2 is larger than that at the negative electrode plate 3 or the separator 4 at a time of battery abnormality, it is preferable to dispose the flame retardant layer at the positive electrode plate 2.

Further, in this embodiment, an example that the cyclic compound expressed by the general formula of (NPR₂)₃ or (NPR₂)₄ is used as the flame retardant contained in the flame retardant layer was shown, however the present invention is not limited to the same. A linear compoundmaybe used. Further, in this embodiment, an example that SBR is used as the binder mixed to the flame retardant layer was shown, however the present invention is not limited to this. Any non-fluorinated organic polymer may be used as the binder to be contained in the flame retardant layer, however it is preferable to be a polymer including an aromatic vinyl compound or a conjugated diene compound. As such a binder, for example, acrylonitrile-butadiene copolymer maybe listed other than SBR. When an improvement in the movement of lithium-ions at the flame retardant layer is considered, an improvement in battery performance can be expected by using a polymer having ionic conductivity as a binder. Furthermore, in this embodiment, an example of CMC as a thickener mixed to the flame retardant layer was shown, the present invention is not limited to the same. As a thickener, it is sufficient to be water-soluble, and other than CMC, for example, cellulose-based thickener such as hydroxypropyl-cellulose or the like, polyvinyl alcohol-based thickener, acryl-based thickener such as sodium polyacrylate or the like may be listed.

Furthermore, in this embodiment, an example of lithium manganate powder having a spinel crystal structure was shown as the lithium transition metal complex oxide used for the positive electrode active material, however, a lithium transition metal complex oxide in general may be used for the positive electrode active material of the present invention. The lithiummanganate powder having a spinel crystal structure is excellent in electron conductivity and can make an energy density in a lithium-ion secondary battery higher relatively. Further, it is advantageous in that a crystal structure thereof is relatively stable, and that such lithiummanganate powder is excellent in safety, abundant as resources, and small in influence to the environment. Lithium manganate powder having a monoclinic crystal structure may be mixed to the lithium manganate powder having a spinel crystal structure. Besides, the present invention is not particularly limited to a kind of the negative electrode active material, composition of the non-aqueous electrolyte and the like. Further, the present invention is not limited to a lithium-ion secondary battery, and it goes without saying that the present invention is applicable to a non-aqueous electrolyte battery using a non-aqueous electrolyte.

Moreover, in this embodiment, an example that the phosphazene compound which has a solid state at a room temperature and which is water-insoluble is used as the flame retardant was shown, however the present invention is not limited to the same. A phosphazene compound which can restrict the thermal decomposition reaction of the active material or a chain reaction thereof at a predetermined temperature and which is water-insoluble may be used. Such a phosphazene compound is halogen-free and/or antimony-free, and is excellent in anti-hydrolysis and thermal resistance. Further, an example that the powder-state phosphazene compound of which average particle diameter is 3µm is used as a flame retardant was shown, however the present invention is not limited to this. It is sufficient that the flame retardant has a solid state at a room temperature.

Further, in this embodiment, an example of the 18650 typed (small type for civilian use) lithium-ion secondary battery 1 was shown, however the present invention is not restricted to this. The present invention is applicable to a large sized lithium-ion secondary battery having a battery capacity exceeding about 3Ah. Furthermore, in this embodiment, an example of the electrode group 5 formed by winding the positive electrode plate and the negative electrode plate via the separator was shown, however the present invention is not limited to the same. For example, the electrode group may be formed by laminating rectangular positive electrode plates and rectangular negative electrode plates. Further, it is without saying that, with respect to a battery shape, a flat shape, a square shape or the like may be employed other than the cylindrical shape.

### (Industrial Applicability)

Because the present invention provides a non-aqueous electrolyte battery capable of securing safety at a time of battery abnormality and restricting a drop in a charge/discharge property or lowering in an energy density at a time of battery use, the present invention contributes to manufacturing and marketing of a non-aqueous electrolyte battery. Accordingly, the present invention has industrial applicability.

## Claims

1. A non-aqueous electrolyte battery that a positive electrode plate which a positive electrode mixture layer including an active material is formed at a collector and a negative electrode plate which a negative electrode mixture layer including an active material is formed at a collector are disposed via a porous separator, wherein a flame retardant layer is formed at one side or both sides of at least one kind of the positive electrode plate, the negative electrode plate and the separator, and wherein the flame retardant layer contains a non-fluorinated organic polymer, a flame retardant and a thickener.

2. The non-aqueous electrolyte battery according to claim 1, wherein the flame retardant layer contains the non-fluorinatedorganic polymer at a ratio ranging from 2 to 10wt%, the flame retardant at a ratio ranging from 87 to 97wt% and the thickener at a ratio ranging from 1 to 3wt%.

3. The non-aqueous electrolyte battery according to claim 2, wherein the non-fluorinated organic polymer is a polymer including an aromatic vinyl compound or a conjugated diene compound.

4. The non-aqueous electrolyte battery according to claim 3, wherein the non-fluorinated organic polymer is one kind selected from styrene-butadiene copolymer and acrylonitrile-butadiene copolymer.

5. The non-aqueous electrolyte battery according to claim 1, wherein the flame retardant is a water-insoluble phosphazene compound having a solid state under a room temperature.

6. The non-aqueous electrolyte battery according to claim 2, wherein the flame retardant layer is formed by applying a water-soluble slurry containing the non-fluorinated organic polymer, the flame retardant and the thickener to one side or both sides of at least one kind of the positive electrode plate, the negative electrode plate and the separator.

7. The non-aqueous electrolyte battery according to claim 2, wherein the flame retardant layer is formed by applying a water-soluble slurry containing the non-fluorinated organic polymer, the flame retardant and the thickener onto a resin membrane or a metal foil, and then transferring the water-soluble slurry to one side or both sides of at least one kind of the positive electrode plate, the negative electrode plate and the separator.
